# EUROPEAN PATENT APPLICATION

(11) **EP 4 625 231 A1**
(43) Date of publication of application: **01.10.2025**
(21) Application number: 24166173.5
(22) Date of filing: 26.03.2024
(51) Int. Cl.: G06F 21/62

(54) **METHOD AND SYSTEM FOR MANAGING DATA USING DECENTRALIZED CONTENT-ADDRESSABLE STORAGE NETWORKS**

(71) Applicant: Tallinn University of Technology, 19086 Tallinn (EE)
(72) Inventor: Piho, Gunnar, 12618 Tallinn (EE); Klementi, Toomas, 12618 Tallinn (EE)
(74) Representative: Moosedog Oy

(57) **Abstract**

Disclosed is a method for access control, the method comprises aggregating data fragments (106a, 106b, 220a, 220b) pertaining to health information of a first party (108), for obtaining master data (110, 218) pertaining to the first party; dividing the master data into a first plurality of data portions (112a-c); storing the first plurality of data portions at a first plurality of network nodes (114a-c) of a decentralized content-addressable storage network (104, 508), wherein each network node of the first plurality of network nodes stores at least one data portion of the first plurality of data portions; and providing a first access to the first plurality of data portions, to a second party (116).

## Description

### TECHNICAL FIELD

The present disclosure relates to a method for access control. Moreover, the present disclosure also relates to a system for access control to access data such as health data in a secure and controlled manner.

### BACKGROUND

The field of medical/health informatics has witnessed significant growth, driven by technological advancements, data analytics, and the integration of technology into healthcare systems. Innovations include telemedicine, wearable health devices, and personalized health management systems. Electronic Health Records (EHR) adoption has become widespread, streamlining patient's health data or information management, and improving clinical decision-making.

However, existing methods utilized for management of health data are associated with several limitations. Herein, the primary (treatment, diagnosis, prevention, etc.) and secondary (public health, healthcare financing, clinical trials, research, policymaking, etc.) use of health data face many challenges and issues. Firstly, data fragmentation hinders both primary and secondary use, affecting the continuity of care, research efficiency, and the ability to draw meaningful insights from aggregated data. This occurs as persons' health data is stored in multiple data silos (such as different healthcare providers, registries, smart devices, wellbeing apps, etc.), none of which has a complete version, resulting in insufficient data quality due to poor data integrity and incompleteness. As an example EHR is managed and controlled by healthcare providers. Each healthcare provider (e.g. hospital) has its own EHR system. If a person has visited two healthcare providers, a person has two EHR-s. This leads to the fragmentation issue in EHR-s - none of the healthcare providers have complete health data about the person.

Secondly, fragmentation of data as well as unstructured form of the data poses challenges in analysis, interpretation, and integration into decision support tools, hindering effective use for patients and healthcare professionals, particularly in its representation through natural language. The use of natural language poses a challenge due to its vagueness, making it imperative to establish an unambiguous formal framework for data representation.

Thirdly, existing health data systems are primarily designed for the primary use of health data for medical purposes, such as diagnosing and treating individuals. These systems contain private personal information that must be carefully protected. However, such protection impedes the widespread secondary use of these data for the benefit of society, where, contrary to protection, the data should be made available for public use as widely as possible.

Next, existing health data systems are primarily designed to operate on third-party cloud or on-premises servers, where individuals have limited, if any, access to their data. This limitation makes it difficult for individuals to exercise the rights granted under data protection laws.

Furthermore, artificial intelligence (AI) has gained substantial public attention due to its increasing prominence in modern digital economy. It has become apparent that by employing artificial intelligence (AI) techniques on personal data and particularly to health-related data, it is feasible to obtain detailed profiles of individuals and subsequently manipulate their thoughts, emotions, and beliefs based on this knowledge. However, the transformative potential of artificial intelligence (AI) in processing personal data and health data, raises ethical concerns regarding the manipulation of individuals, and highlights the broader societal implications, including threats to freedom and liberal democracy.

One of the problems related to health data is that, due to its private nature, "raw" medical data cannot be typically used for training AI systems. Also if AI system is trained using medical data, the trained system, when used, might reveal some personal health related information to users of the AI system. Furthermore if the health data is fragmented it is difficult to form unified understanding of the wellness and health situation of persons. I.e. AI training set is not complete.

Therefore, in light of the foregoing discussion, there exists a need to overcome the aforementioned drawbacks.

### SUMMARY

The aim of the present disclosure is to provide methods and systems for access control, to overcome challenges related to data privacy, security, and efficient access control in the context of managing personal health information. Furthermore, the aim of the disclosure is to ensure that person, whose data is managed has a full control (of who can have an access and under which terms) and ownership of the data. The aim of the present disclosure is achieved by methods and systems for access control as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates an environment where a system for access control is used, in accordance with an embodiment of the present disclosure;
FIG. 2 illustrates an environment in which an access management system is being implemented for access management process, in accordance with an embodiment of the present disclosure;
FIG. 3 illustrates an environment where a root hash management process for access control is used, in accordance with an embodiment of the present disclosure;
FIG. 4 shows a flowchart illustrating steps of a method for access control, in accordance with an embodiment of the present disclosure; and
FIG. 5 illustrates a block diagram of an architecture of a system for access control, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In a first aspect, the present disclosure provides a method for access control, the method comprising:
aggregating data fragments pertaining to health information of a first party, for obtaining a master data pertaining to the first party;
dividing the master data into a first plurality of data portions;
storing the first plurality of data portions at a first plurality of network nodes of a decentralized content-addressable storage network, wherein each network node of the first plurality of network nodes stores at least one data portion of the first plurality of data portions; and
providing a first access to the first plurality of data portions, to a second party.

In a second aspect, the present disclosure provides a system for access control, the system comprising at least one processor that is communicably coupled to at least a plurality of data source nodes and to network nodes of a decentralized content-addressable storage network, wherein the at least one processor is configured to:
aggregate data fragments pertaining to health information of a first party, from one or more data source nodes associated with the first party, to obtain master data pertaining to the first party;
divide the master data into a first plurality of data portions;
store the first plurality of data portions at a plurality of network nodes of the decentralized content-addressable storage network, wherein one network node stores at least one data portion pertaining to the first party; and
provide a first access to the first plurality of data portions, to a second party, via one or more user devices associated with the second party.

The present disclosure provides the aforementioned first aspect and the aforementioned second aspect, for access control particularly in context of the decentralized content-addressable storage network. The term "access control" refers controlling which parts (all data, partial data, modified data, updated data) of a data can be accessed by which entities. In particular to data which is aggregated personal health data from various sources. This can be considered to be a person-owned, consolidated master data, which the master data comprises health data (PHR - Personal Health Record). This data is, according to embodiments, stored in a decentralized content-addressable storage network. Access control refers to controlling access to that data or portions of that data. This involves further creating and managing a master data and secondary copies and granting and controlling access rights to others, either to master data or secondary copies (of the mater data). Herein, aggregating the data fragments allows for compilation of the master data that is comprehensive in nature, for the first party. This ensures that complete and relevant health information about the first party is captured, thereby overcoming issues of data fragmentation. Moreover, dividing the master data into the first plurality of data portions enables distributed storage. Alternatively or additionally the master data can be organized into logical sections, so that each logical section is divided into particular subsets of the first plurality of data portions. This enables further efficient organization and management of the master data, since each such subset of data portion can be handled independently. Such independent handling of logical sections allows for optimized storage and retrieval of the health information. Furthermore, organizing of the master data into logical sections that is divided into the subset of the first plurality of data portions enables granular access control. Hence, instead of providing access to all health information, access can be granted selectively to logical structures by creating a new, selective copy of master data, and therefore only to specific data portions which ensures that parties only access the information that is relevant to their requirements. Advantageously, storing the first plurality of data portions at the first plurality of network nodes in the decentralized content-addressable storage network enhances data resilience and security, which reduces a risk of data loss or unauthorized access of the master data. Furthermore, providing the first access to the first plurality of data portions allows for a controlled and a secured sharing of the health information with the second party. Beneficially, the aforementioned first aspect and the aforementioned second aspect include improved data aggregation, decentralized storage benefits, efficient data access, and controlled sharing, thereby contributing to a robust and user-friendly approach to data management in the decentralized content-addressable storage network. Moreover, the aforementioned system is modular and scalable, as each network node of the first plurality of network nodes stores at least one data portion of the first plurality of data portions. Advantageously, adoption of decentralized content-addressable storage and access control in healthcare, reduces a need for extensive data storage systems which leads to cost savings on capital expenses and/or maintenance expenses. This cost-efficient alternative contributes to the optimization of healthcare providers' overall operational budgets, allowing them to redirect resources towards improving patient care and addressing evolving healthcare challenges. The synergistic integration of both the aspects creates a data access system that is robust, comprehensive, efficient, decentralized, user-friendly, and privacy-preserving.

Throughout the present disclosure, the term *"first party"* refers to a particular entity or a particular individual (e.g., a patient) whose health information is being collected from data fragments. Herein, the term *"data fragments"* refers to distinct segments of data that pertain to the first party. Optionally, the data fragments relate to medical data or health data, wherein the medical data comprises at least one of: laboratory test results, health-related information (for example, such as blood pressure, heart rate), imaging studies (for example, such as, X-rays, MRIs), medical prescriptions, lifestyle information (for example, such as user activity, nutrition, health vitals, and similar). These data fragments could be a result of the health information being distributed across different locations or sources, wherein the health information comprises at least one of: medical diagnoses, medical prognoses, treatment plans, medical histories, general health information of the first party.

In general, the term "health information" comprises medical information, health related general information and/or personalized health data. Term information refers to data, such as a file, image file, metadata, number values etc. The data fragments of the health information can originate from some clinical institutions' EHR systems (typically referred also as medical information i.e. information/data which originates from hospitals and doctors systems). Heath related general information originates and includes data from mobile wearables, smart apps (dietary, physical activity), consumer medical devices for home use (e.g. blood pressure devices), various person-entered data including various questionaries, PREM's and PROM's, etc.

Throughout the present disclosure, the term *"master data"* refers to a consolidated set of information that represents the health information of the first party. In other words, the master data provides a consolidated view of a health profile (a Personal Health Record) of the first party, which facilitates in decision-making and analysis of the health information pertaining to the first party. In this regard the master data is obtained by identifying and collecting the data fragments from relevant external sources and/or databases. Master data aggregates data fragments from various external data sources pertaining to health information of a first party.

In this regard, the data fragments are distributed across various sources, for example, such as healthcare providers. When the data fragments are aggregated, it provides a complete health record of the patient (a Personal Health Record). Herein, the data fragments are aggregated by at least one of: collecting, organizing, integrating the data fragments into a unified dataset that forms the master data which represents a complete medical profile of the first party. Thereafter, a format of the master data is standardized to resolve inconsistencies and is further cleaned for accuracy. It will be appreciated that the data fragments are collected from sources, for example, such as Electronic Health Records (EHRs), wearable devices, medical imaging systems, health monitoring tools, laboratory reports, and similar. Each source contributes specific data related to the first party's health information.

Beneficially, aggregating the data fragments allows for comprehensive and cohesive understanding of the health information of the first party which streamlines management of the data fragments. Hence, such aggregation makes it easier to maintain and access the health information pertaining to the first party. Furthermore, aggregating the data fragments facilitate in at least one of: customizing medical services (for example, customized wellness plans), provide recommendations, provide interventions based on the health profile of the first party.

Optionally, the step of aggregating the data fragments, pertaining to the health information of the first party, for obtaining the master data comprises:
collecting, from one or more data source nodes, the data fragments pertaining to the health information of the first party;
collating the data fragments for generating aggregate data pertaining to the first party; and
standardizing the aggregate data into a structured format, for generating the master data pertaining to the first party.

In this regard, the term *"data source nodes"* refers to any external entity (or network node such as a database or server) from where the data fragments originate, which contribute the data fragments pertaining to the health information of the first party. Examples of such data source nodes, may include, but are not limited to, external hospital (regional, national) information systems, devices of healthcare providers, health software applications, diagnostic laboratories, pharmacy records, wearable devices, and health devices. When the one or more data source nodes comprises health software applications, a user device is employed to run such health software applications. Herein, the health software applications are designed to manage health-related information, thus providing services and/or facilitating communication between healthcare providers and the first party. The data fragments pertain to information regarding daily activities, nutrition, exercise, vital signs, well-being, and so forth, of the first party. When the one or more data source nodes comprises wearable devices (for example, such as fitness trackers, smartwatches, fitness rings), the data fragments pertain to physical activity, vital signs, and the forth, pertaining to the first party. When the one or more data source nodes comprises health devices (for example, such as a blood pressure monitor, a glucometer, an oximeter, and similar), the data fragments pertains to a value of blood pressure, a value of glucose level, a value of oxygen level in blood, of the first party.

Subsequently, the data fragments are collated (i.e., combined) to generate the aggregate data, that provides a comprehensive view of the health profile of the first party. This aggregated data is in different formats and structures as the data fragments are collected from one or more data source nodes. Thereby, standardizing the aggregated data into the structured format is an essential step in generating the master data pertaining to the first party. These aggreged data fragments are used to form or obtain the master data.

The term *"structured format"* refers to organized and systematic arrangement of data. Herein, structured formats are characterized by having a predefined schema which outlines the types of data that can be stored, the relationships between different data elements, and the rules for data integrity. Herein, the standardization involves cleaning, normalizing, and transforming the aggregate data into the structured format which is consistent in nature, thereby ensuring uniformity and an ease of analysis. For example, standardizing the aggregate data in an exemplary healthcare scenario may involve standardizing dates in a MM/DD/YYYY format, standardizing units of measurement of vitals (for example, such as standardizing units of blood pressure measurements to millimetres of mercury (mmHg)), harmonizing coding systems (for example, such as International Classification of Diseases (ICD) codes) for medical diagnosis, and so forth. Hence, standardizing the aggregate data reduces errors during analysis of the health information. Beneficially, the structured format of the aggregate data facilitates to generate meaningful analysis, reporting, and decision-making. Such structured format is beneficial for professionals (for example, such as researchers, etc.) for analysing health trends, by identifying correlations and patterns for public health initiatives. Moreover, the process of collecting, collating, standardizing, and transforming the data fragments into the structured format that results into the master data, is essential for ensuring data accuracy, interoperability, efficient analysis, and compliance with privacy regulations in healthcare.

A technical effect of obtaining the master data in such a manner is that a standardized dataset is generated that serves as a reliable foundation for various healthcare applications and decision-making processes.

Throughout the present disclosure, the term *"first plurality of data portions"* refers to a set of data chunks used for storing the master data in a decentralized content addressable storage network. In doing so, the master data might be organized into multiple logical segments or parts of the master data for management, processing, or storage purposes. Alternatively the first plurality of data portions comprise all data of the master data. Herein, the first plurality of data portions represents the health profile of the first party in a divided manner. According to an embodiment the first plurality of data portions might comprise a first data originating from a first logical section of the master data. (number of logical sections can be arbitrary i.e. there can be one section related to symptom one of the person and other section related to general heath data such as weight and height). Division to logical sections allows to manage access of different type of logical data in different manner. As an example, general health data access would be related to a first hash and for example mental health related logical subset of the data to a second hash. In this regard, the first logical segment (or segments and parts) are subsets of master data. Alternatively those can be regarded as subsets of the first plurality of data portions which are managed separately for optimized storage and retrieval. In this regard, dividing the master data into the first plurality of data portions also involves breaking down the master dataset into smaller or more manageable logical segments or parts. Beneficially, this supports scalability as each subset of the first plurality of data portions that store some particular logical segment or part can be processed concurrently, thereby reducing a requirement of time resources. In an instance when the master data is a large dataset, the division into the logical sections or parts enables optimised storage strategies, by considering factors like redundancy and data retrieval speed. Furthermore, dividing the master data into logical sections or parts that can be managed with different access controls and security measures, thereby providing enhanced security and privacy. This allows for the selective organizing of specific logical sections and parts into separate copies of master data based on user permissions according to data owners' wishes. Herein, such logical organization of master data is based on at least one of: an input provided by the first party, a data category, and a data criticality. When the organization into logical sections and parts is based on the input provided by the first party, the input pertains to specific instructions and/or preferences on how the master data is to be divided.

Moreover, the term *"data category"* refers to a classification or grouping of data based on shared characteristics, attributes, or purposes and involves organizing information into distinct sets that represent specific types, classes, or domains of the master data. Some examples of data categories are chronic health conditions, fitness and wellness goals, medical tests and treatments, medical insurance. Herein, when the master data is organized by logical sections and parts based on the data categories, it involves grouping of similar types of health information together. As a first example, health records may be categorized into data categories, wherein chronic health conditions may be divided into a plurality of data portions (P1), fitness and wellness goals may be divided into a plurality of data portions (P2), medical tests and treatments may be divided into a plurality of data portions (P3), and medical insurance data may be divided into a plurality of data portions (P4), and so forth. As one and the same logical part may belong to more than one category, the pluralities of data portions may overlap.

Moreover, the term *"data criticality"* pertains to a level of importance or significance assigned to different types of data within the master data. Herein, the data criticality is subjective and context-dependent, as importance of data can vary based on factors such as urgency, sensitivity, and potential consequences. For example, emergency-use data is highly critical, whereas preventive health checks-related data may be comparatively less critical. Hence, when the master data is divided into logical parts based on the data criticality, highly critical data could be placed in a particular subset of a plurality of data portions, while less critical data could be placed in another subset of particular plurality of data portion. Such division ensures that the highly critical data receive focused attention, possibly enhanced security measures, and special handling protocols.

Throughout the present disclosure, the term *"network nodes"* refers to computing devices, servers, or other entities that can at least one of: send, receive, or forward, the first plurality of data portions in the decentralized content-addressable storage network. The term *"decentralized"* refers to a content-addressable storage network where there is no central authority or a single point of control as the first plurality of data portions are distributed among multiple entities.

Subsequently, the term *"content-addressable storage"* refers to a storage based on content or characteristics of the first plurality of data portions, rather than relying on physical address (for example, such as Internet Protocol (IP) addresses). Hence, throughout the present disclosure, the term *"decentralized content-addressable storage network"* refers to a network infrastructure for storing data in the decentralized manner, wherein no single entity controls the entire system. Herein, the storage and retrieval of data are based on the content of the data, and this is achieved through a distributed network of the first plurality of network nodes. Moreover, the decentralized content-addressable storage network enables efficient and decentralized access to the data by utilizing content-based identifiers, such as cryptographic hashes.

Beneficially, storing the first plurality of data portions across the first plurality of network nodes enhances accessibility as at least one data portion can be retried from a nearest network node and/or most available network node, thereby reducing latency. Furthermore, storing the first plurality of data portions across the first plurality of network nodes ensures redundancy, in which when one node fails or becomes inaccessible, then at least one data portion of the first plurality of data portions remains available on other network nodes of the first plurality of network nodes, which contributes to resilience. Such distribution ensures that no single network node stores the master data or the first plurality of data portions, hence promoting a distributed storage approach. As an example, peer-to-peer networks may distribute a file which is stored as a first plurality of data portions, across first plurality of network nodes.

Throughout the present disclosure, the term *"first access"* refers to a primary access provided to the second party. The term *"second party"* refers to an entity or entities to whom access of the first plurality of data portions is being provided by the first party. Herein, the second party comprises healthcare providers, for example, such as doctors, nurses, or other medical staff, who require access to the first plurality of data portions. Herein, providing selective and controlled access to the first plurality of data portions is essential for maintaining privacy and ensuring that sensitive information is disclosed only to relevant parties. In this regard, providing the first access to the first plurality of data portions may include different methods, for example, such as access via an application programming interface (API), access by disclosing a unique hash value. In general, when the access is provided, a hash key is provided. Each of the first plurality of data portions (a huge amount of tiny pieces of data in a really massive amount of nodes) have a hash (key). Whoever has this hash can turn the "electronic paper shredder" work upside down - reassembling an "electronic paper" by collecting together all the tiny pieces of data from an enormous number of nodes. In this regard the access to the master data is provided by providing the hash key. The hash key can enable to collect all master data or the hash key can be allocated to portion of the data i.e. a subset of the data portions. Each first party have their own master data and related own hash key. Benefit of this is that it is virtually impossible to get access to data of all first parties since everyone's data has separately organized access. This is different from centralized database in which compromise of (root) password compromises all data.

Herein, the API is a set of rules that allows one software application to interact with another and acts as a bridge, enabling the secure and controlled exchange of data between systems. Moreover, the hash value is a fixed-size string of characters generated by a hash function that is unique to content of the first plurality of data portions. Thereby, by providing this hash value, the second party can request and retrieve corresponding data portions. This adds a layer of security and control, thereby allowing access to be provided only when a correct hash value is provided. As an example, a health data may be divided into a first plurality of data portions, which is categorized into different types of treatments, such as allopathic and ayurvedic. When providing access to healthcare providers, a first access may be provided to a healthcare professional specializing in allopathic medicine to grant access to particular data portions related to allopathic treatments. However, access to another particular data portions concerning ayurvedic treatments may not be accessible by said doctor, as the hash given to the doctor does not include these data portions that belong to these logical parts related to the ayurvedic medical system. Beneficially, healthcare professionals often require quick and efficient access to relevant health information of the first party to ensure that critical information is readily available when needed. Moreover, in many geographical regions, healthcare data is subject to strict regulations regarding privacy and confidentiality, thereby providing the first access based on specialization, assists in compliance with these regulations, by limiting access to sensitive information only to those who require it for their specific roles.

Optionally, the first access is provided by forming a first hash, wherein the first hash comprises content address of the logical sections and parts of the first plurality of the data portions, and by providing the first hash. In this regard, the term *"first hash"* refers to a fixed-size strings of characters generated by the hash function (for example, such as a cryptographic hash function) representing the content addresses of the logical sections and parts of the first plurality of the data portions. In this regard, the first plurality of the data portions has corresponding hash values which are arranged separately, until the first hash remains, which represents address of the master data. Herein, the use of content addresses in the first hash ensures consistency as the same content addresses will always produce the first hash, allowing for reliable and predictable access to the first plurality of the data portions. This consistency is essential for maintaining the integrity and reliability of the access control system. A technical effect of employing the first hash is that it facilitates in providing security, efficiency, and consistency in handling sensitive health information, for decentralized content-addressable storage networks. Continuing in reference to the first example, a first hash of the data portion P1 may be "abc123", a first hash of the data portion P2 may be "def456", a first hash of the data portion P3 may be "ghi789", and a first hash of the data portion P4 may be "jkl112". In general one can say that the (first) hash is synonym to content address.

Optionally, the first hash is provided to an access management system, which the access management system uses the first hash to obtain the first plurality of data portions and the access management system is configured to provide a first subset of the first plurality of data portions based on access rights of the second party using the access management system. In this regard, the term *"access management system"* refers to a software application that is executed to facilitate and control access to obtain the first plurality of data portions from the decentralized content-addressable storage network. The term *"first subset"* refers to specific data portions of the first plurality of the data portions that are provided to the second party based on their access rights. Herein, the access management system receives the first hash, which is generated from the content addresses of the first plurality of data portions. This first hash serves as a reference to relevant data portions in the decentralized content-addressable storage network. Subsequently, the access management system uses the first hash to obtain the first plurality of data portions from the decentralized content addressable storage network. This involves querying a network node from amongst the first plurality of network nodes for the specific data portions associated with the content addresses in the first hash. Furthermore, the access management system is configured with access rights information for the second party, wherein the access rights define which data portions from amongst the first plurality of data portions the second party is allowed to retrieve and access.

Subsequently, the access management system evaluates the access rights in conjunction with the first hash to determine the subset of data portions that can be provided to the second party. Thereafter, the access management system using the first hash and considering the access rights of the second party, provides the first subset of the first plurality of data portions. Herein, the first subset is a specific selection of data portions that aligns with authorized access rights of the second party. Beneficially, the access management system ensures that second party can only access a particular subset of the first plurality of data portions that aligns with their authorized rights, enhancing privacy and security. The use of the first hash streamlines data retrieval, hence the access management system efficiently identifies and retrieve the relevant data portions from the decentralized content-addressable storage (DCAS) network, minimizing latency in accessing health information. A technical effect is that it enables controlled and efficient access mechanism in healthcare scenarios, thereby promoting privacy, security, and adherence to access rights.

As an example, the access management system may be configured to provide different levels of access rights to healthcare providers (i.e., the second party) based on their roles. For example, a doctor may have full access to the medical history (which includes diagnoses and treatment plans), a nurse may have access to basic information such as vital signs and medication records, and an administrative staff member may have access to appointment schedules. Herein, when the doctor requests the first access, the access management system may provide the first subset containing detailed medical records. When the nurse requests the first access, the access management system provides a limited subset, omitting sensitive details not relevant to their role.

Optionally, the method further comprises:
applying a de-identification technique to the master data, for forming de-identified data copy;
dividing the de-identified data copy into a second plurality of data portions;
storing the second plurality of data portions at a second plurality of network nodes of the decentralized content-addressable storage network, wherein each network node of the second plurality of network nodes stores at least one data portion of the second plurality of data portions; and
providing a second access to the second plurality of data portions, to a third party.

In this regard, the term *"de-identification or de-identification technique"* refers to a technique employed to make a copy of master data by removing (to anonymize or pseudonymize) personally identifiable information (PII) from the master data and/or from the data fragments. Herein, applying the de-identification technique is used to enhance privacy and complying with data protection regulations, as the health information often contains sensitive and personally identifiable information. In this regard, the de-identification technique is applied to the master data through techniques, for example, such as data anonymization techniques or data pseudonymization techniques. It will be appreciated that the data anonymization techniques are employed to protect private or sensitive information by erasing or encrypting identifiers that connects an individual to stored data. For example, patient names may be transformed into generic identifiers, exact ages may be replaced with ranges within which the age value lies. Alternatively, the data pseudonymization techniques are employed to remove personal identifiers from the master data and replace said personal identifiers with unique codes (for example, such as hash values generated by the cryptographic algorithm). This way a de-identified data copy (of the mater data) is formed. For example, a name of a patient may be replaced with unique codes. Optionally, a special software module is executed on the user device, wherein the special software module anonymizes the health data of the first party by removing personal identifiers and other information that could potentially lead to the identification of the first party. Subsequently, applying the de-identification technique to the master data enables more secure sharing of health data between entities for collaborative efforts hence building trust among stakeholders, facilitating data exchange for research or public health initiatives. Beneficially, de-identified data copy is valuable for research and analysis while mitigating the risk of privacy breaches, thereby allowing researchers to draw insights from the data without compromising individual identities. The de-identified data copy refers to copy of master data from which personal, identification etc related information have been removed.

Subsequently, the de-identified data copy is divided into the second plurality of data portions. Herein, the term *"second plurality of data portions"* refers to a set of data chunks used for storing a de-identified data copy in a decentralized content addressable storage network. In doing so, a de-identified data copy is organized into multiple logical segments or parts of the de-identified data copy for management, processing, or storage purposes. Dividing the de-identified data copy into logical sections or parts that can be managed with different access controls and security measures provides enhanced security and privacy. This allows for the selective organizing of specific logical sections and parts into separate de-identified data copies based on user permissions according to data owners' wishes.

Subsequently, the second plurality of data portions are distributed and stored at the second plurality of network nodes in a manner similar to the manner of storing the first plurality of data portions within the decentralized content-addressable storage network. Hence each logical section or part from amongst the second plurality of data portions emulates a separate entity, resulting in assignment of a new address, or a new hash value, to each logical section or part. Herein, the term *"second plurality of network nodes"* refers to multiple nodes within the decentralized content-addressable storage network responsible for storing the second plurality of data portions. Herein, each network node is responsible for storing at least one data portion.

Thereafter, the second access is provided through an application programming interface (API) or by disclosing the unique hash values to authorize and provide access to the de-identified data portions to the third party. Additionally, cryptographic methods may be used. Herein, the term *"second access"* refers to authorization or permission provided to the third party to retrieve or use the second plurality of data portions. This access could be provided through various means such as application programming interface (API) access or by disclosing unique hash value or other access tokens as well. Herein, access may be provided to some or all the logical parts of a de-identified data copy. For example, a researcher specializing in allopathic medicine may not be provided access to logical parts related to ayurvedic treatments undergone by the first party. This is done by generating a hash for second access without these logical parts. Subsequently, healthcare researcher may be provided access to the aggregated, de-identified data (copy) for statistical analysis while ensuring patient privacy.

The term *"third party"* refers to the entity or entities to whom access of the second plurality of data portions is being provided. Herein, the third party could be indexers (an administrator of dedicated medical data registries like cancer registries, cardiovascular registries, etc.), medical professionals, researchers, educators, policy makers, and the like.

A technical effect of generating the de-identified data copy in such a manner is that it facilitates providing privacy to the first party which aligns with legal requirements of the geographical region, and enables secure and ethical secondary use of the health information. Furthermore, organizing the de-identified data copy according to the logical sections and parts and storing them as separate subsets inside the second plurality of data portions at the second plurality of network nodes allows for meaningful analysis and collaboration while upholding the confidentiality of the health information of the first party.

Optionally, the second access is provided by forming a second hash, wherein the second hash comprises content address of the second plurality of the data portions and the second hash is provided to the third party, wherein the third party is one of: a person accessing the data, an artificial intelligence training system, an artificial intelligence system, an indexing service system, a statistical service system or research institute system.

In this regard, the term *"second hash"* refers to a fixed-size strings of characters generated by the hash function representing the content addresses of the second plurality of the data portions. The second hash is a secure and efficient way to represent the content addresses of the second plurality of data portions, allowing the third party to access allowed logical sections and parts without revealing the master data. Herein, similar to the first access, the second hash is formed and is created based on the content addresses of the second plurality of data portions. Herein, a software application that is owned by the first party, and which operates on the user device of the first party, can store the second hash and facilitate reading and writing of data in the second plurality of the data portions, within the decentralized content-addressable storage network. In an exemplary use case scenario, the health information can be accessed by the third party through the API (for example, such as a Fast Healthcare Interoperability Resources (FHIR)) that is implemented on the user device. This API ensures interoperability and standardized communication between different systems and applications within the healthcare domain.

Subsequently, the second hash is provided by the first party to the third party, wherein the third party is one of: the person accessing the data, the artificial intelligence training system, the artificial intelligence system, the indexing service system, the statistical service system, or research institute system. Herein, the person accessing the data can be a healthcare professional, or any authorized individual. For example, the software application may use the second hash to securely access specific data portions stored in the decentralized network directly from their user device.

Herein, a core application is an open-source software that operates on the user device, thus emulating a personal portal to the health information of the first party. This core application primarily aims to present the health information of the first party that stored in the decentralized content-addressable storage, in a user-friendly manner. Additionally, the core application enables the first party to perform various tasks such as annotating, searching, filtering, and sorting the logical sections and parts that will form in the second plurality of the data portions.

Subsequently, the core application establishes communication with the decentralized content addressable storage network by utilising an abstraction layer. This abstraction layer ensures independence from specific network implementation. Moreover, the core application employs software layers that incorporate various standard protocols commonly used in healthcare to facilitate interoperability. Subsequently, the core application's functionality can be expanded through integration of separate downloadable modules which can be easily added to the core application. Beneficially, one tasks of the core application are managing the second hash of current data version that enables an essential role in providing access to the second plurality of the data portions and must therefore be managed exclusively by the first party. However, in an unfortunate event of losing the second hash, retrieving access to the second plurality of the data portions would become impossible thereby the method employed for storing the second hash incorporate safeguards to prevent both unauthorized access and accidental loss. According to embodiment the second hash is stored under the first hash. In this regard the second hash can be recovered as long as access via the first hash is valid. Subsequently, the artificial intelligence (AI) training system can use the second hash to access the second plurality of data portions for training machine learning models, hence ensures that only the necessary data is used for model development. For example, the first party may provide the second hash to a hospital based on the content addresses of the second plurality of the data portions that contains anonymized medical images. This second hash may be provided to the artificial intelligence (AI) training system, enabling them to access specific data portions for training without compromising patient privacy.

Additionally, the operational artificial intelligence (AI) system uses the second hash to retrieve real-time data or specific data for decision-making without exposing the entire dataset. The indexing service system also uses the second hash to categorize or index the data portions for efficient retrieval and organization. The statistical service system uses the second hash to gather specific data portions for generating statistical analyses or reports while respecting privacy and access restrictions. Furthermore, the research institute system uses the second hash to access data for research purposes, ensuring that only the approved subset of data is used for research studies. Herein, by providing the second hash to the third party, it enables controlled and targeted access to specific data portions, as each third party can only retrieve the data identified by the second hash, reducing the risk of unauthorized access. Advantageously, the first party possesses complete control over determining which data from amongst the second plurality of the data portions they choose to share with the third party by sharing the second hash access.

A technical effect of providing the second access in such a manner is that it facilitates a secure, efficient, and adaptable mechanism for controlled access to specific data portions in the decentralized content-addressable storage network. The use of the second hash enhances privacy, promotes efficient data transfer, and allows the method to be applied across diverse scenarios and user types.

Optionally, the master data is updated to include an additional data fragment, the additional data fragment is stored in the decentralized content-addressable storage network and a third hash is formed to access the updated master data.

In this regard, the term *"additional data fragment"* refers to an extra data that is added to the existing master data. Herein, the additional data fragments represent different types of information. In an exemplary healthcare scenario, the additional data fragments may include new medical test results, updated treatment information, recent health observations, newly recorded events, and similar. The term *"third hash"* refers to concise representation of the content addresses of the updated master data. The third hash serves as a key or identifier to access the updated master data in the decentralized content-addressable storage network. The third hash is used by the authorized parties to retrieve the entire set of master data, including the additional data fragment added during the update. Whenever a modification is made to the master data, the hash value is updated to reflect the changes. Hence, the third hash permits access to the updated master data, while the previous hash value (namely, the first hash and/or the second hash) represents the master data prior to the updated master data. Each data fragment is stored based on its content address, ensuring unique identification. Thereafter, the third hash is formed based on the content addresses or structure of the entire updated master data, representing the unique content addresses or structure of the updated information. Beneficially, the third hash serves as an efficient identifier for accessing the updated master data. This is particularly useful when healthcare providers need quick and targeted access to the latest patient information. Hence, this mechanism supports a natural versioning mechanism and safeguards data against unauthorized modifications. Advantageously, the decentralized nature of networks eradicates the vulnerability associated with single points of failure, as data is distributed across multiple nodes. A technical effect of updating the master data in such a manner is that it facilitates a secure, efficient, and versioned mechanism that ensures data integrity, privacy, and accountability, which enables modification of the master data with a new version, efficient retrieval of that, a transparent versioning system, enhancing overall security and reliability.

Optionally, the method for access control is applied to a group of first parties to provide unique accesses to the master data of each first party of the group of first parties, for the second party.

In this regard, the term *"group of first parties"* refers to a collection of individuals or entities for whom the data is collected and managed, whereas these first parties are patients, users, or entities whose data is being managed. Herein, the method for access control that each first party within the group of first parties has unique and secure access to their master data, allowing for efficient and personalized medical care while maintaining strict privacy measures. Typically, access control parameters are set based on a unique identifier for each patient like hash value or access token can be used as secure identifiers.

For example, in a healthcare system, there may be a group of patients (first parties), and healthcare providers (the second party) who need access to patient data of the group of patients for medical care. Herein, the group of patients may include patients A and B. The access control is applied individually for each patient. Thereafter, controlled access is established so that each healthcare provider can only access the master data of the specific patient they are attending. A doctor X may have access to a master data of the patient A, a nurse Y may have access to a master data of the patient B. Subsequently, when attending to patient A, doctor X may securely access patient A's medical history, recent test results, and treatment plans. Simultaneously, nurse Y may access, and update information related to patient B.

Advantageously, the method for access control is adaptable to different healthcare systems and is scalable to accommodate varying numbers of the first party and the second party. Furthermore, this ensures unique and controlled access for each first party of the group of first parties, hence maintaining individualized privacy and security of the master data. A technical effect for the method of access control being applied to the group of first parties to provide unique accesses to the master data to facilitate a secure, scalable, and efficient method for accepting unique and controlled access to the master data.

Optionally, the method further comprises:
for each data portion amongst the first plurality of data portions, defining a neighborhood of a network node at which said data portion is stored, wherein the neighborhood of the network node comprises a set of network nodes; and
storing a copy of said data portion, at each network node amongst the set of network nodes.

The term *"set of networks nodes"* refers to the collection or group of individual computing devices or systems that are part of the decentralized content-addressable storage network. These nodes collectively form the decentralized content-addressable storage network, working together to store and manage the data in the decentralized manner. Herein, the neighbourhood of the network node refers to the group of nearby nodes within the decentralized content-addressable storage network. In other words, neighbourhood of the network node is a set of nodes that are in close proximity to a given node based on certain criterion, often determined by the underlying distributed hash table (DHT) protocol.

Herein, the plurality of data portions is assigned with unique hash values. Hence, when the second party needs to access this information, the decentralized content addressable network efficiently locates the network node closest to the hash value. Herein, one commonly used distance metric in decentralized content addressable networks is the exclusive OR (XOR) operation performed on their respective overlay addresses, interpreting the result as an integer value. Such a metric is a Kademlia distance in a Kademlia network. In the Kademlia network, each node and data item are assigned a unique identifier (ID) that is often represented as large integer. The XOR distance between two IDs is calculated using the XOR operation, and it serves as a measure of proximity. For example, when considering two network nodes with addresses 5 and 6, the resulting distance between them may be 3, as 0101 XOR 0110 equals 0011.

The Kademlia distance adheres to fundamental axioms of distance, including non-negativity, symmetry, zero value of the distance of the network node from itself, and triangle inequality. Subsequently, for the given network node, its neighborhood is defined by selecting network nodes that are closest in XOR space. A size or radius of the neighborhood is a parameter that determines how many network nodes are included.

As an example, there may be a simplified XOR space where network nodes have identifiers ranging from 0 to 255 (8-bit identifiers for simplicity). The XOR metric between nodes A (identifier 50) and B (identifier 60) may be 14, ensuring that these nodes could be in each other's neighborhoods. Thereafter, if the plurality of data portions may be stored at Node A, copies of the first plurality of data portions may be stored at Nodes B, C, and D within the neighborhood.

Hence, if any network node experiences a failure, or if it leaves the network, the neighboring network nodes still provide access to the master data. Herein, based on the size of the decentralized content-addressable storage network and a churn rate of the decentralized content-addressable storage network, it is ensured that first plurality of data portions remains accessible even if some network nodes join or depart. Notably, the churn rate is a rate at which network nodes enter and leave the decentralized content-addressable storage network.

Beneficially, by storing copies of said data portion at the set of network nodes, the network enhances fault tolerance even if one or more nodes become unavailable, the data portion remains accessible through redundant copies. The copies distributed across the neighborhood ensure that the data portion is available even if original storage node experiences issues hence the second party can retrieve the medical history of the first party from any network node within the neighborhood. Thereby, the redundant copies provide resilience against the churn caused by the network nodes entering or leaving the decentralized content-addressable storage network. Furthermore, the neighborhood concept ensures adaptability to changes in the structure of the decentralized content-addressable storage network. The copies stored across the neighbourhood network nodes can be periodically synchronized to maintain consistency ensuring that all copies are up-to-date and reflect the latest version of the data. Moreover, the built-in redundancy within the decentralized content-addressable storage network, wherein copies of specific data chunks are stored across all nodes within the respective Kademlia metrics hence safeguards against accidental data loss. Since overlay addresses are randomly assigned to the network nodes, and the Kademlia metric has nothing to do with geographical dimensions, the network nodes belonging to neighbourhood network nodes are typically dispersed worldwide and are under the management of different operators.

A technical effect of defining neighbourhoods and storing copies at each network node amongst the set of network nodes enhances robustness, fault tolerance, and efficiency of the decentralized content-addressable storage network, contributing to the reliable and scalable system for managing distributed data.

Optionally, the method further comprises:
encrypting a given hash with an encryption key; and
storing the given hash that is encrypted, within a smart contract associated with the first party, wherein the smart contract is implemented on a public blockchain;
storing a secret data comprising the encryption key and an address of the smart contract, on a user device associated with the first party.

In this regard, the term *"encryption key"* refers to a variable value applied to strings of information (bits) within an encryption algorithm to encode (namely, encrypt) and decode (namely, decrypt) data. Encryption key is an essential key in securing data, and the security of the encrypted data often lies on the strength and confidentiality of the encryption key. This encryption key is required for decrypting the ciphertext back into the original hash values. The term *"smart contract"* refers to self-executing contract with the terms of the agreement directly written into code. Herein, the term *"public blockchain"* refers to the decentralized and transparent digital ledger that is accessible to anyone participating in the network. This blockchain is not owned or controlled by a single entity but is distributed across multiple network nodes that validate and record transactions in consensus-based manner. The term *"secret data"* refers to sensitive information that needs to be kept confidential for security purposes. Herein, the secret data includes the encryption key used for encrypting hash values and the address of the smart contract. Keeping this data secret ensures that only authorized parties can access and control certain operations of the decentralized content addressable storage network. The term *"user device"* refers to any electronic device used by an individual (user) that is associated with the first party (the person to whom the health data belongs) within the decentralized content addressable storage network. User devices includes smartphones, wearable devices, personal computers, laptops, smart home devices etc.

Optionally, root hash management process is used for access control. Herein, encrypting the given hash with an encryption key serves a purpose of enhancing the security and confidentiality of sensitive information. Encryption ensures that only authorized parties with the correct decryption key can access the original hash values. This is essential when dealing with sensitive information, such as health data where maintaining confidentiality is of highest importance. Herein, encryption involves applying mathematical algorithms to transform the hash values into ciphertext, which is unreadable without the corresponding decryption key. Common encryption algorithms include Advanced Encryption Standard (AES) and Rivest-Shamir-Adleman (RSA), these encryption algorithms effectively mitigate the risk of data loss. Typically, the decentralized healthcare storage system where patient health records are stored in the decentralized content-addressable storage network and the plurality of data portions are associated with the plurality of hash values, representing its content as defined above. Thereby, before storing the given hashes in the decentralized content-addressable storage network, these hashes are encrypted with the unique encryption key. For example, the hash value amongst the plurality of the data portion P1 may be "abc123". After encryption with the encryption key, the hash value of the data portion P1 may be "XbZ12QpL" and in the similar way applicable for the plurality of hash values for the first plurality of data portions.

Beneficially, without the encryption key, this encrypted text remains secure and confidential. Thereafter, the hash values that are encrypted is then stored within the smart contract associated with the first party. Herein, storing encrypted hash values within the smart contract associated with the first party on the public blockchain provides the secure and transparent way to manage access to the secret data. Typically, data stored on the public blockchain is immutable, meaning it cannot be altered or deleted once recorded. This feature ensures the permanence and integrity of the encrypted hash values over time. Furthermore, public blockchains provide transparency, allowing all participants in the decentralized content-addressable storage network to view and verify transactions hence storing hash values on the public blockchain ensures that the data existence and history are openly accessible, enhancing trust among participants.

Herein, before storing the given hash values in the smart contract, they are encrypted using algorithms as discussed earlier, thereby ensures that even if the data is publicly stored, only authorized parties with the decryption key can access the original hash values. For example, in the healthcare scenario where the patient wants to securely share specific health records with authorized healthcare providers. The patient's encrypted hash values may be stored in the smart contract on the public blockchain, whereas access to the patient's data is governed by the rules coded into the smart contract hence ensuring that only authorized parties can retrieve and decrypt the original hash values. Moreover, the secret data comprising the encryption key and an address of the smart contract is then stored, on the user device associated with the first party. Herein, the encryption key and the smart contract address are sensitive pieces of information that should be securely stored on the user's device. This can be achieved through various secure storage mechanisms. For example, using the healthcare application on the smartphone, the application generates the encryption key for accessing their health data stored on the blockchain. The encryption key along with the smart contract address, is securely stored in the device's Keychain or Keystore. This ensures that only authorized applications on the device can access and use these sensitive credentials.

A technical effect includes more secure, transparent, and user-controlled network for managing and accessing health data within the decentralized content-addressable storage network. The use of encryption, blockchain, and decentralized storage collectively enhances data privacy, integrity, and user autonomy.

Optionally, the method further comprises:
dividing the secret data into a plurality of secret data portions;
storing the plurality of secret data portions at a plurality of user devices associated with a set of entities, wherein the entities in the set are selected by the first party; and
upon receiving a request for recovering the secret data, initiating accessing of the plurality of secret data portions and generating a recovered version of the secret data when at least a predefined threshold of secret data portions amongst the plurality of secret data portions are successfully accessed.

In this regard, the term *"plurality of secret data portions"* refers to the multiple sensitive data portions that need to be kept confidential for security purposes. The term *"plurality of user devices"* refers to multiple electronic devices used by an individual (user) that is associated with the first party (the person to whom the health data belongs) within the decentralized content addressable storage network. Herein, the term *"set of entities"* refers to the specific group of individuals, such as friends or relatives selected by the first party for recovery of secret data purposes.

The term *"at least predefined threshold of secret data portions"* refers to the minimum number or proportion of the divided data portions required to reconstruct the original secret data. This threshold is set by the first party to ensure the balance between security and data recovery.

Herein, the secret data is divided into the plurality of secret data portions ensuring that no single entity possesses the complete secret. Beneficially, dividing the secret data into the plurality of secret data portions enhances security, controls access, and enables recovery strategies. The specifics of the division and distribution can vary based on cryptographic methods and user-defined preferences. By distributing the portions of the secret data among trusted entities, the first party ensures that no single entity has access to the complete information hence adds an extra layer of security. Furthermore, in the case the first party needs to recover the secret data during an emergency, the first party can request cooperation from the entities in the set of entities. Thereafter, accessing the predefined threshold of the secret data portions allows the reconstruction of original data. Advantageously, this approach balances security and data recovery, allowing the first party to retain control over their sensitive data while providing mechanism for access when needed.

A technical effect involves distributing secret data portions at the plurality of user devices associated with the set of entities enhances security, resilience, and privacy in conditions where sensitive data needs to be securely managed and accessed by multiple trusted parties.

Optionally, one data portion amongst the first plurality of data portions comprises emergency-use data, and wherein the method further comprises:
receiving a request for accessing said data portion comprising the emergency-use data, from a user device associated with one of: the first party, the second party, wherein the request includes an address to the data portion at which said emergency data is stored; and
providing access to said data, to the user device.

In this regard, the method includes the specific provision for emergency-use data related to some plurality of data portions. This emergency-use data includes essential information that may be needed urgently, especially in emergency situations such as medical emergencies. Herein, the term *"request"* refers to a communication or message sent from the user device to the decentralized content addressable storage network, expressing the desire to access said plurality of data portions containing emergency-use data. This request includes essential information which is an address of plurality of network nodes at which said data portion is stored. Additionally, the term *"network nodes"* here refers to the nodes where the plurality of data portions comprises emergency-use data, are stored.

Herein, the emergency-use data forming the specialized subset amongst master data, is endowed with the unique address within the content-addressable storage network. This network architecture allows for global accessibility, ensuring that authorized entities can retrieve the data from any connected location. Furthermore, the first party are advised to consistently carry reference to this subset for emergency situations. This reference can take various forms, such as digital format stored on a microchip, a QR code on a wearable tag, or alternative means. This ensures that the critical health information is readily available, especially when needed urgently. In this regard, when the request for accessing the emergency-use data is received from the user device associated with either the first party (the individual to whom the health information pertains) or the second party (an authorized entity such as doctors or healthcare providers) during an emergency case. The request is then processed to access the emergency-use data portion hence involves verifying the conformity of the request, ensuring that it comes from the authorized user device associated with either the first party or the second party. Herein, once the request is validated, an access to the emergency-use data portion is provided, and then the data is provided to the user device that sends the request. For example, consider a scenario where paramedic responding to medical emergency needs immediate access to critical health information about the patient (the first party). The paramedic's user device may send the request to the decentralized content addressable storage network specifying the address to the plurality of data portions in the plurality of network nodes where the emergency-use data is stored. Thereby, the request after validation, recognizes the request to be an emergency scenario, and provides access to the relevant emergency-use data portion. This could include information (e.g. some standardized Patient Summary) about allergies, medical conditions, or medications that are essential for the paramedic to know in order to provide appropriate care. Advantageously, the during emergency situations, there is a need for immediate access to critical health information. However, rather than providing unrestricted access to the individual's entire comprehensive health records, selective access is allowed only to the data portion comprising emergency-use data, ensuring the confidentiality of the user's comprehensive health records.

A technical effect for managing and accessing emergency-use data within the decentralized and globally accessible health data storage network involves emphasizing efficiency, confidentiality, and user convenience during emergency situations.

Optionally, the method further comprises:
building a compensation mechanism, using a blockchain and smart contracts; and
executing the compensation mechanism for providing compensation to network operators of network nodes of the decentralized content-addressable storage network in lieu of providing storage services.

In this regard, the term *"compensation mechanism"* refers to a process that is designed to reward and compensate network operators that contribute their services to the decentralized content-addressable storage network. This compensation is typically provided in exchange for the services rendered, such as storing data on the network nodes. The term *"blockchain"* refers to a network technology infrastructure that provides the decentralized and secure infrastructure for recording and executing transactions related to compensation within the content-addressable storage network. Typically, the success and sustainability of the decentralized networks rely on establishing a clear and robust incentive mechanism. This mechanism is essential to motivate network operators that bear the costs associated with providing services within the decentralized network. Beneficially, the blockchain facilitates global accessibility to the compensation mechanism as network operators regardless of their geographical location can participate in the decentralized storage network and receive compensation.

However, in the decentralized network, compensating network operators becomes challenging due to the absence of a central authority. Traditional compensation processes may not align with the principles of decentralization and involving intermediary bodies risks compromising the decentralized nature of the decentralized content-addressable storage network. Thereby, to overcome the challenges of decentralized compensation, the compensation mechanism built on blockchain and smart contracts. Blockchain with its decentralized and tamper-resistant nature, provides a suitable foundation. Moreover, smart contracts which are self-executing contracts with the terms directly written into code, automate and secure the compensation process. Beneficially, within such system the utilization of crypto tokens as a medium of payment becomes feasible. Subsequently, alternative compensation mechanisms relying on traditional fiat currency would necessitate the involvement of an intermediary body hence this involvement contradicts the goal of maintaining the network's decentralization. Thereby, preference is for compensation mechanisms built on blockchain and smart contracts. Herein, by utilizing crypto tokens and avoiding reliance on traditional fiat currencies ensures that compensation is transferred directly on the blockchain without the need for intermediary bodies. This contributes to maintaining the decentralized nature of the network. Advantageously, the compensation mechanism ensures that network operators are adequately motivated to sustain the decentralized content-addressable storage network, hence aligns with the goal of achieving full decentralization and promotes the long-term viability of the network. Subsequently, the adoption of the blockchain and smart contracts in the storage network offers the benefits of achieving full decentralization, enhancing reliability, and ensuring security and integrity in the storage and compensation processes.

Once the compensation mechanism is built, there is automated operation of smart contracts on the blockchain to calculate and distribute compensation to network operators. The execution of the compensation mechanism begins by collecting relevant data from the decentralized content-addressable storage network which includes information about the amount of data stored by each network node, the duration of storage, or other specified criteria. Notably, network nodes continuously record the data they store and the duration of storage on the blockchain. Thereby, the smart contract calculates the compensation based on the collected data that may include some formula considering factors like the amount of stored data, the duration of storage, or other specified parameters. For example, smart contract may calculate compensation as a function of the total volume of data stored by the network node multiplied by predetermined compensation rate. Thereafter, once the compensation is calculated, the smart contract automatically transfers the corresponding amount of cryptocurrency tokens to the wallet addresses associated with the network operators or nodes. For example, network operators may receive compensation in the form of cryptocurrency tokens directly to their designated wallets on the blockchain.

Simultaneously, every transaction including the calculation and distribution of the compensation is recorded on the blockchain ensuring transparency and immutability of the compensation process. For example, details of each compensation transaction including the amount, recipient addresses, and timestamp, are recorded as blocks on the blockchain. Thereby, notifications may be sent to the relevant parties upon successful execution of the compensation mechanism ensuring that network operators are aware of and can verify the compensation received. Beneficially, the adoption of decentralized storage results in reduced capital expenditures for healthcare providers. Notably, building and maintaining extensive data storage systems involve significant upfront costs related to hardware, infrastructure, and security measures. Thereby, with the decentralized content-addressable storage network, the infrastructure requirements are distributed among network nodes leading to more cost-effective scaling hence healthcare providers can avoid substantial upfront investments in centralized storage facilities.

A technical effect of building the compensation mechanism using the blockchain and smart contracts involves the establishment of the decentralized, transparent, and automated network for compensating network operators hence contributes to the efficiency, reliability, and trustworthiness of the compensation process within the decentralized content-addressable storage network.

The invention provides a computer program product comprising a non-transitory machine-readable data storage medium having stored thereon program instructions that, when accessed by a processing device, cause the processing device to execute steps of a method of the first aspect.

Various embodiments and variants disclosed above apply *mutatis mutandis* to the computer program product.

The computer program product comprising a non-transitory machine-readable data storage medium having stored thereon program instructions that, when accessed by a processing device, cause the processing device to execute steps of the aforementioned method. The term *"computer program product"* refers to a software product comprising program instructions that are recorded on the non-transitory machine-readable data storage medium, wherein the software product is executable upon a computing hardware for implementing the aforementioned steps of the method.

In an embodiment, the non-transitory machine-readable data storage medium can direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

The present disclosure also relates to the second aspect as described above. Various embodiments and variants disclosed above, with respect to the aforementioned first aspect, apply *mutatis mutandis* to the second aspect.

### DETAILED DESCRIPTION OF THE DRAWINGS

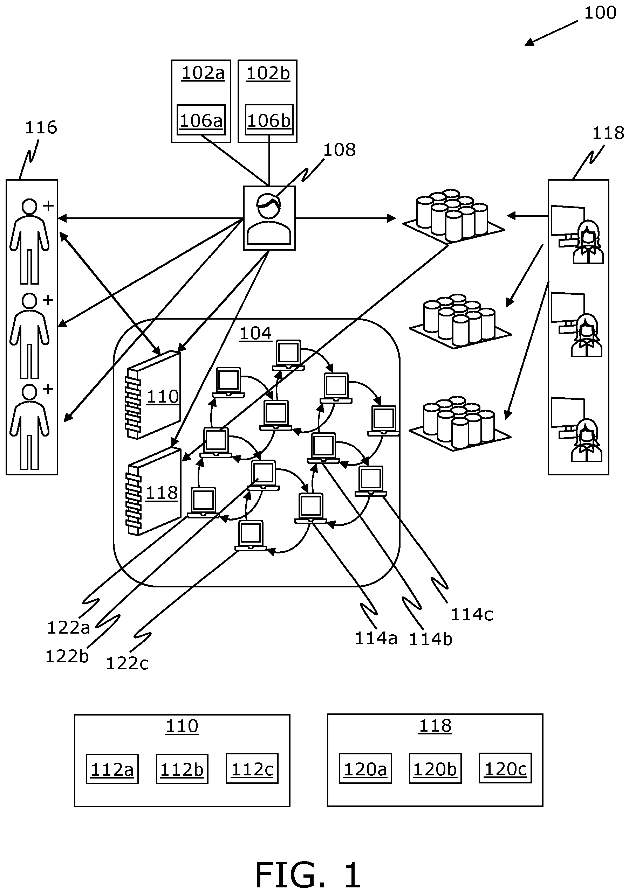

Referring to FIG. 1, there is illustrated an environment **100** where a system for access control is used, in accordance with an embodiment of the present disclosure. The system comprises at least one processor (not shown for sake of simplicity) that is communicably coupled to at least a plurality of data source nodes (depicted as data source nodes **102a** and **102b)** and to network nodes of a decentralized content-addressable storage network **104.** The at least one processor is configured to aggregate data fragments **106a** and **106b** pertaining to health information of a first party **108** from one or more data source nodes (from amongst the data source nodes **102a-b)** associated with the first party **108,** to obtain master data **110** pertaining to the first party **108.** The at least one processor is configured to divide the master data **110** into a first plurality of data portions **112a, 112b,** and **112c.** The at least one processor is configured to store the first plurality of data portions **112a, 112b, 112c** at a first plurality of network nodes **114a, 114b,** and **114c** of the decentralized content-addressable storage network **104,** wherein each network node of the first plurality of network nodes **114a, 114b, 114c** stores at least one data portion of the first plurality of data portions **112a, 112b, 112c** pertaining to the first party **108.** The at least one processor is configured to provide a first access to the first plurality of data portions **112a, 112b, 112c** to a second party **116.**

Optionally, the at least one processor is configured to apply a de-identification technique to the master data **110** for forming de-identified data copy **118.** The at least one processor is configured to divide the de-identified data copy **118** into a second plurality of data portions **120a, 120b,** and **120c).** The at least one processor is configured to store the second plurality of data portions **120a, 120b, 120c** at a second plurality of network nodes **122a, 122b,** and **122c** of the decentralized content-addressable storage network **104,** wherein each network node of the second plurality of network nodes **122a, 122b, 122c** stores at least one data portion of the second plurality of data portions **120a, 120b, 120c.** Thereafter, the first party **108** provides a second access to the second plurality of data portions **120a, 120b, 120c** to a third party **118.**

It may be understood by a person skilled in the art that the FIG. 1 includes a simplified architecture of a system for sake of clarity, which should not unduly limit the scope of the claims herein. The person skilled in the art will recognize many variations, alternatives, and modifications of embodiments of the present disclosure.

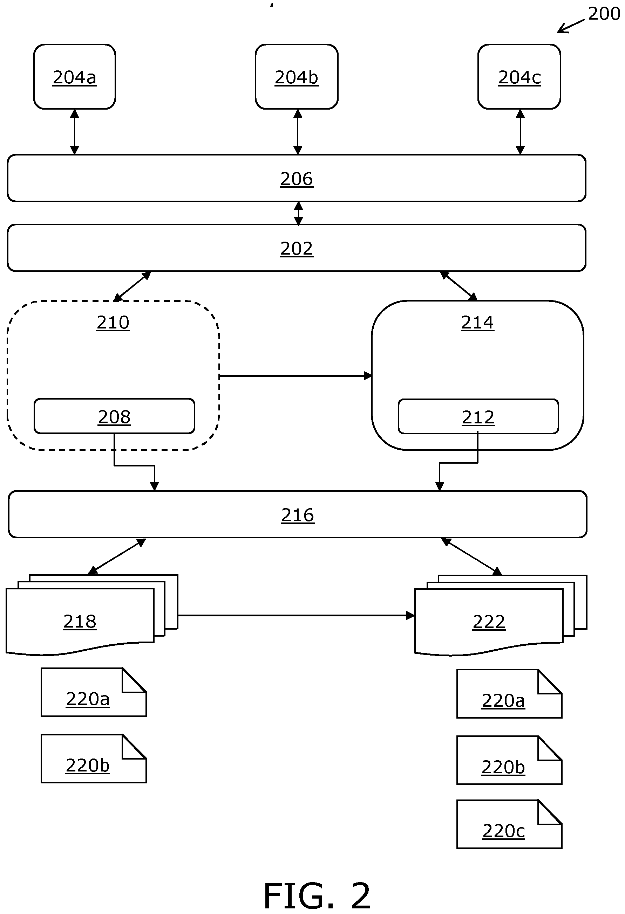

Referring to FIG. 2, there is illustrated an environment **200** in which an access management system **202** is being implemented for access management process, in accordance with an embodiment of the present disclosure. The environment **200** comprises at least one external system (depicted as user devices **204a, 204b,** and **204c)** associated with at least one of: a first party, a second party. A first access is provided to the access management system **202,** through an application programming interface (API) **206,** by forming a first hash **208** on a software **210,** wherein the first hash **208** comprises content addresses of a first plurality of data portions. The access management system **202** then uses the first hash **208** to obtain the first plurality of data portions as the access management system **202** is configured to provide a first subset of the first plurality of data portions based on access rights of the second party using the access management system **202.**

In a similar way, at least the user devices **204a, 204b, 204c** associated with the second party provides a second access through the API **206** to the access management system **202,** by forming a second hash **212** on a software **214,** wherein the second hash **212** comprises content address of second plurality of the data portions. The content addresses of the first plurality of the data portions and the content addresses of the second plurality of the data portions are stored on the storage abstraction layer **216.**

Additionally, master data **218** including data fragments **220a** and **220b** is updated to include an additional data fragment **220c,** wherein the additional data fragment **220c** is stored in the decentralized content-addressable storage network and a third hash is formed to access the updated master data **222.**

It may be understood by a person skilled in the art that the FIG. 2 includes a simplified architecture of a system for sake of clarity, which should not unduly limit the scope of the claims herein. The person skilled in the art will recognize many variations, alternatives, and modifications of embodiments of the present disclosure.

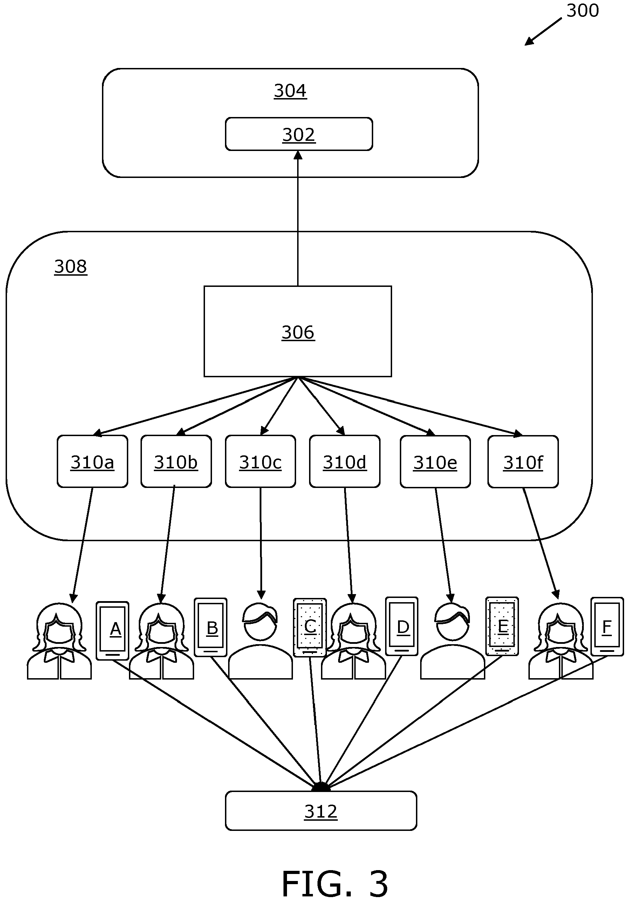

Referring to FIG. 3, illustrated is an environment **300** where a root hash management process for access control is used, in accordance with an embodiment of the present disclosure. As shown, a given hash **302** is encrypted with an encryption key of a decentralized content addressable storage network. The given hash **302** that is encrypted is then stored within a smart contract **304** associated with the first party, wherein the smart contract **304** is implemented on a public blockchain. As shown, a secret data **306** comprising the encryption key and an address of the smart contract **304** is then stored on a user device **308** associated with the first party. Further, the secret data **306** is divided into a plurality of secret data portions (depicted as secret data portions **310a, 310b, 310c, 310d, 310e,** and **310f),** the secret data portions **310a, 310b, 310c, 310d, 310e and 310f** is stored at a plurality of user devices (depicted as user devices **A, B, C, D, E,** and **F**) associated with a set of entities (relatives, family members, etc.). The entities in the set are then selected by the first party and upon receiving a request from the user devices **A-F** of the set of entities for recovering the secret data **306,** the at least one processor is configured to initiate access of the secret data portions **310a, 310b, 310c, 310d, 310e and 310f** and generates a recovered version of the secret data **312** when at least a predefined threshold of secret data portions **306** amongst the plurality of secret data portions **310a, 310b, 310c, 310d, 310e and 310f** are successfully accessed.

It may be understood by a person skilled in the art that the FIG. 3 includes a simplified architecture of a system for sake of clarity, which should not unduly limit the scope of the claims herein. The person skilled in the art will recognize many variations, alternatives, and modifications of embodiments of the present disclosure.

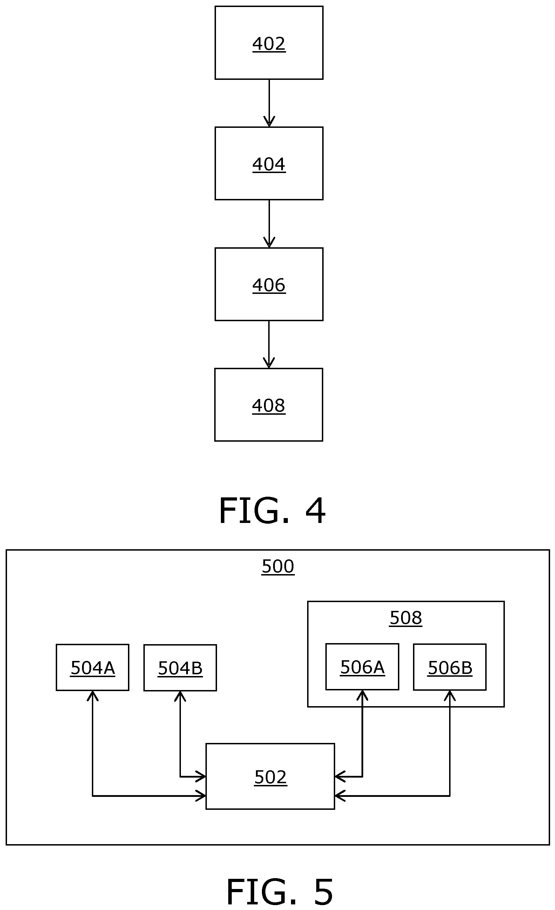

Referring to FIG. 4, there is shown a flowchart illustrating steps of a method for access control, in accordance with an embodiment of the present disclosure. At step **402,** data fragments pertaining to health information of a first party are aggregated for obtaining master data pertaining to the first party. At step **404,** the master data is divided into a first plurality of data portions. At step **406,** the first plurality of data portions is stored at a first plurality of network nodes of a decentralized content-addressable storage network, wherein each network node of the first plurality of network nodes stores at least one data portion of the first plurality of data portions. At step **408,** a first access to the first plurality of data portions is provided to a second party.

The aforementioned steps are only illustrative and other alternatives can also be provided where one or more steps are added, one or more steps are removed, or one or more steps are provided in a different sequence without departing from the scope of the claims herein.

Referring to FIG. 5, illustrated is a block diagram of an architecture of a system **500** for access control, in accordance with an embodiment of the present disclosure. The system **500** comprises at least one processor (depicted as a processor **502**), at least a plurality of data source nodes (depicted as data source nodes **504A** and **504B)** and network nodes **506A** and **506B** of a decentralized content-addressable storage network **508.** The processor **502** is communicably coupled to at least the data source nodes **504A, 504B** and to network nodes **506A, 506BB** of the decentralized content-addressable storage network **508.**

It may be understood by a person skilled in the art that the FIG. 5 includes a simplified architecture of a system **500** for sake of clarity, which should not unduly limit the scope of the claims herein. The person skilled in the art will recognize many variations, alternatives, and modifications of embodiments of the present disclosure.

## Claims

1. A method for access control, the method comprising:
aggregating data fragments (106a, 106b, 220a, 220b) pertaining to health information of a first party (108), for obtaining master data (110, 218) pertaining to the first party;
dividing the master data into a first plurality of data portions (112a, 112b, 112c);
storing the first plurality of data portions at a first plurality of network nodes (114a, 114b, 114c) of a decentralized content-addressable storage network (104, 508), wherein each network node of the first plurality of network nodes stores at least one data portion of the first plurality of data portions; and
providing a first access to the first plurality of data portions, to a second party (116).

2. A method according to claim 1, further comprising:
applying a de-identification technique to the master data (110, 218), for forming de-identified data copy;
dividing the de-identified data copy (118) into a second plurality of data portions (120a-c);
storing the second plurality of data portions at a second plurality of network nodes (122a-c) of the decentralized content-addressable storage network (104, 508), wherein each network node of the second plurality of network nodes stores at least one data portion of the second plurality of data portions; and
providing a second access to the second plurality of data portions, to a third party.

3. A method according to any of the preceding claims, wherein the first access is provided by forming a first hash (208), wherein the first hash comprises content address of the first plurality of the data portions (112a-c), and by providing the first hash.

4. A method according to claim 3, wherein the first hash (208) is provided to an access management system (202), which the access management system uses the first hash to obtain the first plurality of data portions (112a-c) and the access management system is configured to provide a first subset of the first plurality of data portions based on access rights of the second party (116) using the access management system.

5. A method according to any of the preceding claims 2 to 4, wherein the second access is provided by forming a second hash (212), wherein the second hash comprises content address of the second plurality of the data portions and the second hash is provided to the third party, wherein the third party is one of: a person accessing the data, an artificial intelligence training system, an artificial intelligence system, an indexing service system, a statistical service system or research institute system.

6. A method according to any of the preceding claims, wherein the master data (110, 218) is updated to include an additional data fragment (220c), the additional data fragment is stored in the decentralized content-addressable storage network (104, 508) and a third hash is formed to access the updated master data (222).

7. A method according to any of the preceding claims, wherein the method for access control is applied to a group of first parties to provide unique accesses to the master data (110, 218) of each first party of the group of first parties, for the second party (116).

8. A method according to any of the preceding claims, further comprising:
for each data portion amongst the first plurality of data portions (112a-c), defining a neighborhood of a network node at which said data portion is stored, wherein the neighborhood of the network node comprises a set of network nodes; and
storing a copy of said data portion, at each network node amongst the set of network nodes.

9. A method according to any of the preceding claims, wherein the step of aggregating the data fragments (106a, 106b, 220a, 220b) pertaining to the health information of the first party (108), for obtaining the master data (110, 218) comprises:
collecting, from one or more data source nodes (102a-b, 504a-b), the data fragments (106a, 106b, 220a, 220b) pertaining to the health information of the first party (108);
collating the data fragments for generating aggregate data pertaining to the first party; and
standardizing the aggregate data into a structured format, for generating the master data pertaining to the first party.

10. A method according to any of claims 3-9, further comprising:
encrypting a given hash (302) with an encryption key;
storing the given hash that is encrypted, within a smart contract (304) associated with the first party (108), wherein the smart contract is implemented on a public blockchain; and
storing a secret data (306) comprising the encryption key and an address of the smart contract, on a user device associated with the first party.

11. A method according to claim 10, further comprising:
dividing the secret data (306) into a plurality of secret data portions (310a-f);
storing the plurality of secret data portions at a plurality of user devices (A-F) associated with a set of entities, wherein the entities in the set are selected by the first party (108); and
upon receiving a request for recovering the secret data, initiating accessing of the plurality of secret data portions and generating a recovered version of the secret data (312) when at least a predefined threshold of secret data portions amongst the plurality of secret data portions are successfully accessed.

12. A method according to any of the preceding claims, wherein one data portion amongst the first plurality of data portions (112a-c) comprises emergency-use data, and wherein the method further comprises:
receiving a request for accessing said data portion comprising the emergency-use data, from a user device (204a-c, 308) associated with one of: the first party (108), the second party (116), wherein the request includes an address to the data portion at which said emergency data is stored; and
providing access to said data portion, to the user device.

13. A method according to any of the preceding claims, further comprising:
building a compensation mechanism, using a blockchain and smart contracts; and
executing the compensation mechanism for providing compensation to network operators of network nodes of the decentralized content-addressable storage network (104, 508) in lieu of providing storage services.

14. A method according to any of the preceding claims, wherein the first plurality of data portions comprises a first data originating from a first logical section of the master data.

15. A computer program product comprising a non-transitory machine-readable data storage medium having stored thereon program instructions that, when executed by a processor, cause the processor to execute steps of a method of any of claims 1-14.

16. A system (500) for access control, the system comprising at least one processor (502) that is communicably coupled to at least a plurality of data source nodes (102a-b, 504a-b) and to network nodes (506a-b) of a decentralized content-addressable storage network (104, 508), wherein the at least one processor is configured to:
aggregate data fragments (106a, 106b, 220a, 220b) pertaining to health information of a first party (108), from one or more data source nodes (102a, 102b) associated with the first party, to obtain master data (110, 218) pertaining to the first party;
divide the master data into a first plurality of data portions (112a, 112b, 112c);
store the first plurality of data portions at a plurality of network nodes of the decentralized content-addressable storage network, wherein one network node stores one data portion pertaining to the first party; and
provide a first access to the first plurality of data portions, to a second party (116), via one or more user devices (204a, 204b, 204c) associated with the second party.
